# EUROPÄISCHE PATENTANMELDUNG

(11) **EP 4 631 895 A1**
(43) Veröffentlichungstag der Anmeldung: **15.10.2025**
(21) Anmeldenummer: 25181131.1
(22) Anmeldetag: 01.12.2021
(51) Int. Cl.: B65G 47/86

(54) **VORRICHTUNG ZUM GREIFEN UND TRANSPORTIEREN VON GEGENSTÄNDEN**

(62) Teilanmeldung aus: 21211652.9
(71) Anmelder: Tyrolon GmbH, 6395 Hochfilzen (AT)
(72) Erfinder: SCHULNIG, Elmar, 6392 St. Jakob i.H. (AT); SCHULNIG, Ludwig, 6392 St. Jakob i.H. (AT)
(74) Vertreter: Meissner Bolte Partnerschaft mbB

(57) **Zusammenfassung**

Eine Vorrichtung zum Greifen und Transportieren von Gegenständen (2), beispielsweise Behältern, umfasst eine Welle (3;46;62), eine Anordnung (8;51;66), welche zumindest einen Träger (11;53;68) umfasst, der verdrehsicher an der Welle (3;46;62) angeordnet ist, wobei eine axiale Position der Anordnung (8;51;66) entlang der Welle (3;46;62) verstellbar ist, und wenigstens eine am Träger (11;53;68) angeordnete Greifeinrichtung (25a-h;84a-i). Jede Greifeinrichtung (25a-h;84a-i) umfasst ein Greifarmpaar (28,29;85,86) zum Greifen eines der Gegenstände (2). Die Vorrichtung umfasst einen Verstellmechanismus zum Verstellen der axialen Position der Anordnung (8;51;66) entlang der Welle (3;46;62), der eine an der Welle (3;46;62) ausgebildete Zahnstange (7;58;65) und eine in der Anordnung (8;51;66) drehbar gelagerte und mit der Zahnstange (7;58;65) zusammenwirkende Getriebewelle (20;57;78) umfasst.

## Beschreibung

Die Erfindung bezieht sich auf eine Vorrichtung zum Greifen und Transportieren von Gegenständen, beispielsweise Behältern, umfassend:
eine Welle;
eine Anordnung, welche zumindest einen Träger umfasst, welche Anordnung verdrehsicher an der Welle angeordnet ist;
wenigstens eine Greifeinrichtung, am Träger angeordnet,
wobei jede Greifeinrichtung ein Greifarmpaar zum Greifen eines der Gegenstände umfasst; und
einen Verstellmechanismus zum Verstellen einer axialen Position der Anordnung entlang der Welle.

Die EP 3 239 078 A1 offenbart eine höhenverstellbare Transporteinrichtung mit einer Stellplatte und zwölf Greifeinrichtungen, sowie mit einer Ansteuerungsvorrichtung und einer Arretierung. Jede Greifeinrichtung weist ein Greifarmpaar aus zwei Greifarmen mit Greifabschnitten, zwei Lagerbolzen für die Greifarme, eine Schaltachse mit einer Schaltklaue und einen Aufnahmesockel, in dem die Lagerbolzen und die Schaltachse befestigt sind, auf. Die Stellplatte und die darauf befestigten Greifeinrichtungen sind mittels einer Antriebswelle der Transporteinrichtung rotierbar und, um eine Unwucht zu vermeiden, achsensymmetrisch um eine Antriebswelle angeordnet und/oder ausgebildet. Die Ansteuerungsvorrichtung ist auf der Antriebswelle drehbar gelagert, damit die Ansteuerungsvorrichtung beim Betrieb der Transporteinrichtung nicht mitrotiert und die Greifeinrichtungen, insbesondere die Schaltklauen, immer an mindestens einer bestimmten Position ansteuert. Zusätzlich wird eine Arretierung verwendet, um eine Rotation der Ansteuerungsvorrichtung mit der Antriebswelle vollständig zu unterbinden. Die Arretierung ist als sich von der Ansteuerungsvorrichtung erstreckender Steg ausgebildet und mit einem unbeweglichen, bzw. nicht mit der Antriebswelle rotierenden Gegenstand verbunden. Sowohl die Stellplatte als auch die Ansteuerungsvorrichtung sind mit der Antriebswelle verbunden und entlang dieser Antriebswelle (senkrecht) verfahrbar.

Damit die Stellplatte trotzdem mit der Antriebswelle mitrotiert, ist die Stellplatte entweder entlang von senkrecht verlaufenden Nuten bzw. Schienen an der Verbindungsstelle zwischen Stellplatte und Antriebswelle verfahrbar oder mit einem Befestigungselement mit der Antriebswelle fixiert. Dieses Befestigungselement kann auch dazu dienen, die Höhe der Stellplatte an der Antriebswelle zu arretieren. Eine weitere höhenverstellbare Transporteinrichtung weist einen pneumatischen oder hydraulischen Stellantrieb auf. Noch eine andere Transporteinrichtung weist eine höhenverstellbare Stellplatte, eine festmontierte Trägerplatte, eine Fixierungsplatte und ein Handrad als manuellen Stellantrieb zur Höhenverstellung der Stellplatte auf. Das Handrad ist koaxial zu einer Antriebswelle angeordnet und mit einer Spindel mit einem helixförmigen Gewinde versehen. Die Spindel ist in der Fixierungsplatte drehbar gelagert und erstreckt sich durch eine Spindelmutter der Stellplatte bis zur Trägerplatte. Die Spindelmutter ist fest in der Stellplatte integriert.

Um die Höhe der Stellplatte, und folglich die der Greifeinrichtungen, zu ändern, müsste das Befestigungselement gelöst, die Stellplatte händisch verfahren und die neue Höhe mittels des Befestigungselements festgelegt werden. Dies ist umständlich und eine genaue Höheneinstellung ist außerdem schwierig. Pneumatische oder hydraulische Stellantriebe erhöhen die Kosten und das Gewicht der Vorrichtung. Eine mit einer Spindelmutter zusammenwirkende Spindel erfordert eine zusätzliche Fixierungsplatte. Diese erschwert den Zugang zu den Greifeinrichtungen. Austausch oder Reinigung der Greifeinrichtungen wird dadurch umständlicher. Würde man die Antriebswelle mit der Spindel vereinigen, ergäbe sich das Problem, dass die Trägerplatte mit einer genauen Passung an der Welle gelagert sein muss und folglich das Gewinde durch die Trägerplatte belastet werden würde.

Der Erfindung liegt die Aufgabe zugrunde, eine Vorrichtung der eingangs genannten Art anzugeben, die kompakt und leicht gestaltet werden kann, aber eine genaue und relativ unkomplizierte Einstellung der Höhe des mit den Greifeinrichtungen versehenen Trägers erlaubt.

Die Aufgabe wird durch die erfindungsgemäße Vorrichtung zum Greifen und Transportieren von Gegenständen, beispielsweise Behältern, gelöst, welche dadurch gekennzeichnet ist, dass die Vorrichtung einen Verstellmechanismus zum Verstellen der axialen Position der Anordnung entlang der Welle umfasst, der eine an der Welle ausgebildete Zahnstange und eine in der Anordnung drehbar gelagerte und mit der Zahnstange zusammenwirkende Getriebewelle umfasst.

Die Vorrichtung ist besonders zum Greifen, Halten und Führen von Behältern geeignet, wobei der Behälter von einem Greifarmpaar einer der Greifeinrichtungen gehalten wird. Bei den Behältern kann es sich insbesondere um Behältern mit einem länglichen Abschnitt handeln, welcher durch die Einrichtung gegriffen und gehalten wird. Prototypisch hierfür stehen flaschenförmige Behälter mit einem Flaschenhals. Je nach Gestaltung der Arme kann die Flasche eine Glas- oder eine Kunststoffflasche sein. Andere Behälter, für deren Transport sich die Vorrichtung eignet, sind zum Beispiel Dosen oder Gläser, oder generell Behälter mit einem runden Querschnitt.

Die Welle ist um eine feste Rotationsachse rotierbar angeordnet. In den meisten Anwendungsfällen ist die Rotationsachse senkrecht ausgerichtet. Der Träger ist verdrehsicher an der Welle angeordnet, so dass er mit der Welle rotiert, also gegenüber dieser nicht rotieren kann. Der Träger kann beispielsweise als Trägerrad gestaltet sein. In einer Ausführungsform ist er plattenförmig gestaltet. Wenigstens eine, in der Regel mehrere, Greifeinrichtungen sind fest am Träger angeordnet. Sie können insbesondere entlang des Umfangs des Trägers angeordnet sein, wobei sich die Greifarme hauptsächlich in radialer Richtung erstrecken. Mit der Vorrichtung kann ein Gegenstand in einer Drehstellung zwischen die Arme einer der Greifeinrichtungen geführt und festgegriffen und in einer weiteren Drehstellung wieder losgelassen werden. Beispielsweise können so mit der Vorrichtung Gegenstände wie Flaschen von einer Transportlinie zu einer nächsten umgesetzt werden. Die Greifeinrichtungen können Aktuatoren zum Verschwenken der Greifarme aufweisen oder fremdbetätigbar sein.

Der Träger, und folglich die am Träger angeordneten Greifeinrichtungen, sind Teil einer Anordnung, die in ihrer Gesamtheit axial verstellbar ist. Dadurch, dass ein Verstellmechanismus vorgesehen ist, braucht die Anordnung nicht händisch in axialer Richtung bewogen zu werden. Eine Zahnstange kann in der Welle gebildet sein, braucht sich aber nicht über den gesamten Umfang der Welle zu erstrecken. Sie braucht sich lediglich in axialer Richtung zu erstrecken. Somit kann die Welle ansonsten im Grunde (kreis-)zylindrisch gestaltet sein, wobei die zylindrische Mantelfläche den Hauptteil des Umfangs der Welle bildet. Dies erlaubt eine genaue Passung zwischen einer Nabe des Trägers und der Welle. Es kommt nicht oder kaum zu einer Schieflage oder einer unrunden Bewegung des Trägers, auch wenn nur auf einer Seite Gegenstände von den Greifeinrichtungen gehalten werden. Zähne können im Wesentlichen durch Kerben quer zur axialen Richtung definiert sein. Diese Zähne sind robuster als ein Gewinde. Da die Getriebewelle in der Anordnung drehbar gelagert ist und mit der Zahnstange unmittelbar zusammenwirkt, ist eine axial fest montierte weitere Platte nicht erforderlich. Ein Ende der Welle kann deshalb im Betrieb frei sein. Der Zugang zu den Greifeinrichtungen, beispielsweis zu Reinigungs- oder Wartungszwecken, oder um die Arme auszutauschen, ist dadurch erleichtert.

Die Getriebewelle kann auf vielfältige Wiese verdreht werden. Da die Höhe der Anordnung in der Regel nicht häufig geändert wird, kann dies zum Beispiel mit einem nicht zur Anordnung gehörenden Werkzeug erfolgen. Dies macht die Anordnung leichter. Es ist aber auch möglich einen elektrischen, elektromagnetischen, pneumatischen oder hydraulischen Antrieb vorzusehen.

Die Getriebewelle braucht keine längliche Form aufzuweisen. Sie kann auch im Wesentlichen radförmig, beispielsweise als Zahnrad mit einer Rotationsachse quer zur Wellenachse, gestaltet sein.

In einer Ausführungsform ist die Getriebewelle jedoch um eine im Wesentlichen parallel zur Zahnstange ausgerichtete Drehachse drehbar gelagert.

Hierdurch bleibt die Anordnung in radialer Richtung (bezogen auf die Rotationsachse der Welle) relativ kompakt.

In einer Ausführungsform ist die Getriebewelle eine Schneckenwelle.

Eine Schneckenwelle weist eine schraubenförmige Windung auf. In Kombination mit der Zahnstange wird so eine Drehbewegung der Getriebewelle in eine Linearbewegung der Anordnung entlang der Welle umgesetzt. Die Drehachse einer Schneckenwelle kann im Wesentlichen parallel zur Längsrichtung der Zahnstange ausgerichtet werden. Über die Steigung der Windung kann das Übersetzungsverhältnis eingestellt werden.

In einer Ausführungsform ist die Anordnung über ein erstes axiales Ende der Welle auf die Welle steckbar beziehungsweise von der Welle abziehbar, und ist die Welle an einem gegenüberliegenden zweiten Ende koaxial mit einer Antriebswelle verbindbar.

Welle und axial verstellbare Anordnung bilden somit eine Einheit, die von der Antriebswelle getrennt werden kann, beispielsweise zu Wartungs- oder Reinigungszwecken. Damit das zweite Ende zugänglich ist, kann außerdem die axial verstellbare Anordnung über das erste Ende von der Welle entfernt werden, ohne dass weitere Teile zuvor entfernt werden müssen. Hierzu kann sich, je nach Position und Form der Getriebewelle, die Zahnstange bis zum ersten Ende erstrecken.

In einem Beispiel dieser Ausführungsform ist am zweiten Ende ein Verbindungsflansch zum Verbinden der Welle mit der Antriebswelle vorgesehen.

Der Flansch kann einstückig mit der Welle ausgebildet, mit dieser Stoffschlüssig verbunden, oder auf dieser durch Formschluss und/oder Reibschluss montiert sein. Die Flanschverbindung ist relativ stabil und erlaubt eine ziemlich genaue koaxiale Anordnung der Antriebswelle und der Welle.

In einer Ausführungsform der Vorrichtung ist die Anordnung über ein erstes axiales Ende der Welle auf die Welle steckbar beziehungsweise von der Welle abziehbar, und ist die Getriebewelle in einem Teil der Anordnung drehbar gelagert, der an einem dem ersten Ende am nächsten liegenden Ende der Anordnung angeordnet ist.

Zwischen dem freien, ersten Ende der Welle und dem axial dem ersten Ende am nächsten liegenden Ende der Anordnung ist, zumindest im in radialer Richtung betrachtet der Welle am nächsten liegenden Bereich, radial nahe der Welle kein weiterer Vorrichtungsteil angeordnet. Somit ist dieses axiale Ende der axial in Position verstellbaren Anordnung gut zugänglich. Es kann zum Beispiels ein separates Werkzeug benutzt werden, um die Getriebewelle zu drehen.

In einer Ausführungsform der Vorrichtung weist die Getriebewelle an einem Ende einen Abschnitt zum Koppeln zumindest eines Werkzeugs oder eines Aktuators auf.

Dieser Abschnitt wird freiliegen und/oder abstehen. Da eine Verstellung nur ab und zu vorgenommen wird, braucht die Anordnung keinen eigenen Aktuator aufzuweisen.

In einem Beispiel einer Ausführungsform, in der die Anordnung über ein erstes axiales Ende der Welle auf die Welle steckbar beziehungsweise von der Welle abziehbar ist, wobei die Getriebewelle in einem Teil der Anordnung drehbar gelagert ist, der an einem dem ersten Ende am nächsten liegenden Ende der Anordnung angeordnet ist, und wobei die Getriebewelle an einem Ende einen Abschnitt zum Koppeln zumindest eines Werkzeugs oder eines Aktuators aufweist, ist der Abschnitt an einem dem ersten Ende am nächsten liegenden Ende der Getriebewelle angeordnet.

Der Aktuator oder das Werkzeug können folglich von oben angesetzt werden, um die axiale Position der Anordnung zu verstellen.

In einer Ausführungsform der Vorrichtung umfasst der Träger einen runden Körper und stehen die Greifarme gegenüber einem Umfangsrand des runden Körpers vor.

Der Körper kann eine scheibenförmige oder radförmige Grundform aufweisen.

In einer Ausführungsform der Vorrichtung ist die Getriebewelle an oder in dem Träger drehbar gelagert.

Hierdurch wird die Anzahl der Teile reduziert. Außerdem befinden sich der Höhenverstellmechanismus und die Greifeinrichtungen in etwa in einer Ebene in einer gemeinsamen axialen Position.

Eine Ausführungsform der Vorrichtung umfasst ferner eine Einrichtung zum Bilden einer reversibelen Reibschlussverbindung zwischen der Anordnung und der Welle.

Hierdurch wird die eingestellte axiale Position gesichert und der Verstellmechanismus entlastet. Die Welle kann aber weiterhin eine hauptsächlich (kreis-)zylindrische Mantelfläche aufweisen. Die Klemmeinrichtung kann unmittelbar auf diese Fläche wirken.

In einer Ausführungsform der Vorrichtung weist jede Greifeinrichtung wenigstens einen Betätigungsabschnitt auf, eingerichtet, um bei Betätigung ein Schwenken wenigstens eines der Arme des Greifarmpaares um eine jeweilige Schwenkachse zu bewirken, wobei die Anordnung wenigstens eine Komponente umfasst, welche relativ zum Träger in Rotationsrichtung bewegbar und dazu eingerichtet ist, bei Drehung der Welle den jeweiligen Betätigungsabschnitt der Greifeinrichtung zum Schwenken des wenigstens einen Arms zu betätigen.

Da die Anordnung die Komponente(n) umfasst, ist die axiale Position dieser Komponente(n) mittels des Verstellmechanismus verstellbar. Es kann einmalig die axiale Entfernung der Greifeinrichtungen zu der Komponente festgelegt werden, welche sich dann bei Betätigung des Verstellmechanismus nicht ändert. Die Komponente oder Komponenten kann, beziehungsweise können, eine Steuerkurve definieren, welche bei Drehung der Welle über zumindest einen Winkelstellungsbereich den jeweiligen Betätigungsabschnitt der Greifeinrichtung zum Schwenken des wenigstens einen Arms betätigt.

Ein Beispiel dieser Ausführungsform umfasst ferner wenigstens einen starr mit der wenigstens einen Komponente verbundenen Arretiersteg, welche sich in hauptsächlich radialer Richtung erstreckt und zum Koppeln mit einem gegenüber der Welle stationären Gegenstand eingerichtet ist.

Hierdurch wird sichergestellt, dass sich die Greifarmpaare der Greifeinrichtungen öffnen und schließen, wenn die Welle in Drehung versetzt wird. Die Komponente beziehungsweise Komponenten dreht beziehungsweise drehen nicht mit. Die Verbindung kann eine relative axiale Bewegung zwischen der Komponente gegenüber dem Arretiersteg erlauben, oder überhaupt keine Relativbewegung zulassen.

In einem Beispiel einer der Ausführungsformen, in denen jede Greifeinrichtung wenigstens einen Betätigungsabschnitt aufweist, eingerichtet, um bei Betätigung ein Schwenken wenigstens eines der Arme des Greifarmpaares um eine jeweilige Schwenkachse zu bewirken, und wobei die Anordnung wenigstens eine Komponente umfasst, welche relativ zum Träger in Rotationsrichtung bewegbar und dazu eingerichtet ist, bei Drehung der Welle den jeweiligen Betätigungsabschnitt der Greifeinrichtung zum Schwenken des wenigstens einen Arms zu betätigen, umfasst jede Greifeinrichtung wenigstens eine durch Betätigung eines der wenigstens einen Betätigungsabschnitte um eine Schwenkachse drehbar angeordnete Schaltwelle, wobei die Schaltwelle mit der Anordnung axial verstellbar ist.

Dies verringert den Einstellungsaufwand beim Verstellen der axialen Position des Trägers mit den Greifeinrichtungen. Außerdem bildet die Greifeinrichtung mit der Schaltwelle eine Einheit, die leicht abmontiert werden kann. Es sind keine gesondert gelagerten Schaltwellen, entlang derer die Greifeinrichtungen verschoben werden, vorzusehen.

In einem Beispiel dieser Ausführungsform umfasst der Betätigungsabschnitt einen an der Schaltwelle angeordneten, sich von dieser erstreckenden Hebel, beispielsweise in Form eines Rollenhebels.

In dieser Ausführungsform kann die wenigstens eine Komponente beispielsweise durch radiale Entfernung zur Rotationsachse der Welle eine Steuerkurve definieren. Die Schaltwelle bleibt in gleicher radialen Entfernung zur Rotationsachse der Welle. Das Hebelende verlagert sich, wenn der Träger mit den Greifeinrichtungen eine Drehbewegung relativ zur Komponente durchführt. Auch wenn der Betätigungsabschnitt sich nicht entlang einer Steuerkurve bewegt, sondern in anderer Weise mit der oder einer der Komponenten in Eingriff gelangt, wird ein solcher Effekt erzielt.

In einem Beispiel irgendeiner der Ausführungsformen, in denen jede Greifeinrichtung wenigstens einen Betätigungsabschnitt aufweist, eingerichtet, um bei Betätigung ein Schwenken wenigstens eines der Arme des Greifarmpaares um eine jeweilige Schwenkachse zu bewirken, wobei die Anordnung wenigstens eine Komponente umfasst, welche relativ zum Träger in Rotationsrichtung bewegbar und dazu eingerichtet ist, bei Drehung der Welle den jeweiligen Betätigungsabschnitt der Greifeinrichtung zum Schwenken des wenigstens einen Arms zu betätigen, und wobei jede Greifeinrichtung wenigstens eine durch Betätigung eines der wenigstens einen Betätigungsabschnitte um eine Schwenkachse drehbar angeordnete Schaltwelle umfasst, wobei die Schaltwelle mit der Anordnung axial verstellbar ist, ist jede Greifeinrichtung derart ausgebildet, dass Schwenkbewegungen der Arme eines Greifarmpaares um ihre jeweiligen Schwenkachsen gekoppelt sind.

Hierdurch genügt eine Schaltwelle pro Greifeinrichtung. Zudem bewegen sich die Arme eines Greifarmpaares synchron auseinander und aufeinander zu.

In einem weiteren Beispiel irgendeiner der Ausführungsformen, in denen jede Greifeinrichtung wenigstens einen Betätigungsabschnitt aufweist, eingerichtet, um bei Betätigung ein Schwenken wenigstens eines der Arme des Greifarmpaares um eine jeweilige Schwenkachse zu bewirken, wobei die Anordnung wenigstens eine Komponente umfasst, welche relativ zum Träger in Rotationsrichtung bewegbar und dazu eingerichtet ist, die Steuerkurve bei Drehung der Welle den jeweiligen Betätigungsabschnitt der Greifeinrichtung zum Schwenken des wenigstens einen Arms zu betätigen, und wobei jede Greifeinrichtung wenigstens eine durch Betätigung eines der wenigstens einen Betätigungsabschnitte um eine Schwenkachse drehbar angeordnete Schaltwelle umfasst, wobei die Schaltwelle mit der Anordnung axial verstellbar ist, umfasst jede Greifeinrichtung eine Einrichtung zum Erzeugen einer Rückstellkraft, welche zu einem auf die Schaltwelle wirkenden Drehmoment führt.

Die Rückstellkraft kann insbesondere ein aufeinander zu Schwenken der Arme des Greifarmpaares bewirken, das Greifarmpaar also in eine geschlossene Stellung zwingen. Gleichzeitig wird durch die Rückstellkraft gewährleistet, dass der Betätigungsabschnitt sich nicht von der beziehungsweise den Komponenten, beispielsweise einer durch sie definierten Steuerkurve, entfernt. Eine formgeschlossene Verbindung zwischen Komponente, beispielsweise Steuerkurve, und Betätigungsabschnitt ist somit nicht erforderlich. Dies vereinfacht die Montage und Wartung der Vorrichtung.

In einer Ausführungsform der Vorrichtung umfasst jede Greifeinrichtung wenigstens einen Sockel als Träger wenigstens eines der Arme, an dem der Arm bzw. die Arme drehbar gelagert ist bzw. sind, wobei der Sockel integraler Bestandteil des Trägers der Vorrichtung ist.

Dies verringert den Montageaufwand, führt zu einer Gewichtsersparnis und vereinfacht eine Ausführungsform, in der (nur) die Arme der Greifeinrichtungen austauschbar sind.

Die Erfindung wird unter Bezugnahme auf die beiliegenden Zeichnungen näher erläutert, wobei:
- Fig. 1: eine perspektivische Ansicht einer ersten Transportvorrichtung ist;
- Fig. 2: eine Draufsicht der ersten Transportvorrichtung ist;
- Fig. 3: eine Unteransicht der ersten Transportvorrichtung ist;
- Fig. 4: eine Seitenansicht der ersten Transportvorrichtung ist, die nur eine Greifeinrichtung zeigt;
- Fig. 5: eine perspektivische Ansicht auf Teile der ersten Transportvorrichtung ist;
- Fig. 6: eine Seitenansicht auf Teile der ersten Transportvorrichtung ist;
- Fig. 7: eine perspektivische Ansicht einer der in ersten Transportvorrichtung umfassten Greifeinrichtungen ist;
- Fig. 8: einen Querschnitt durch einen axial verstellbaren Teil der ersten Transportvorrichtung zeigt;
- Fig. 9: einen Querschnitt durch einen axial verstellbaren Teil einer abgewandelten Variante der ersten Transportvorrichtung zeigt;
- Fig. 10: eine Draufsicht einer zweiten Transportvorrichtung ist;
- Fig. 11: eine perspektivische Ansicht der zweiten Transportvorrichtung ist;
- Fig. 12: eine perspektivische Ansicht auf Teile der zweiten Transportvorrichtung ist;
- Fig. 13: eine Seitenansicht auf Teile der zweiten Transportvorrichtung ist;
- Fig. 14: eine zweite perspektivische Ansicht auf Teile der zweiten Transportvorrichtung ist;
- Fig. 15: eine Draufsicht auf eine Greifeinrichtung für die zweite Transportvorrichtung ist; und
- Fig. 16: eine Seitenansicht der in Fig. 14 gezeigten Greifeinrichtung ist.

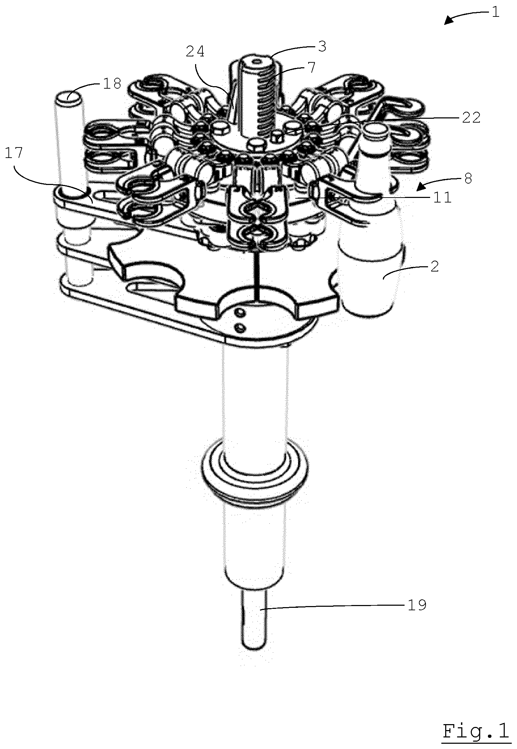

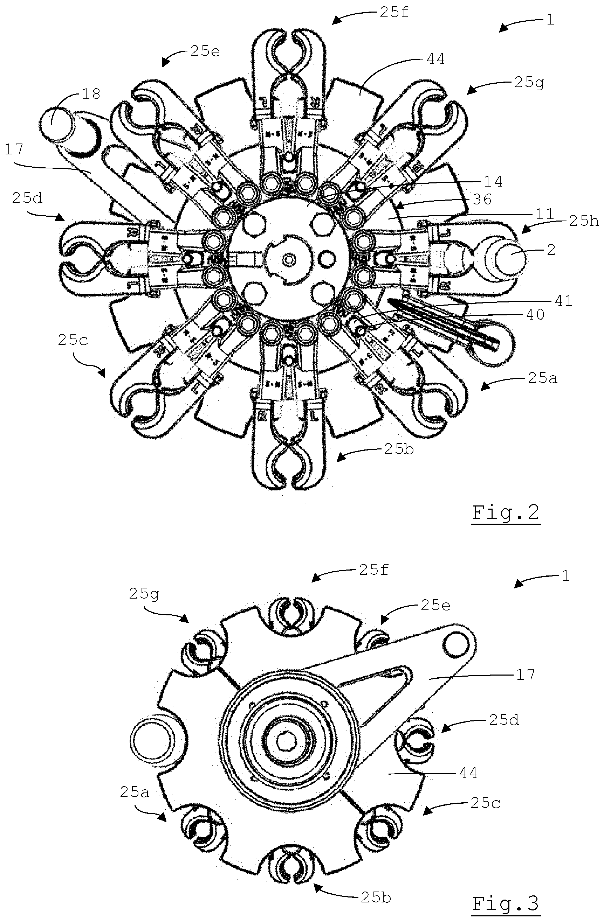

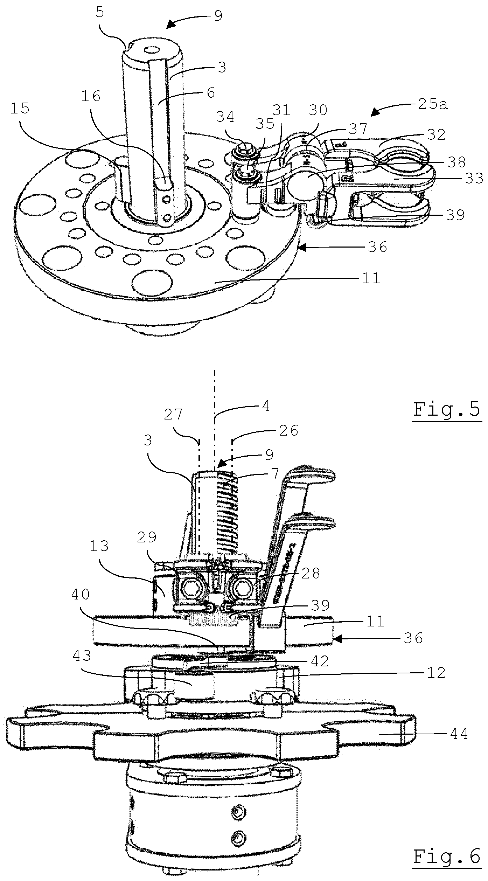

Es wird nachfolgend zunächst eine erste Transportvorrichtung 1 (Fig. 1-8) für einen flaschenförmigen Behälter 2 (Fig. 1) näher erläutert, welche aber prinzipiell auch zum Fördern andersartiger Gegenstände geeignet ist, oder hierzu angepasst werden kann.

Die erste Transportvorrichtung 1 umfasst eine Welle 3. Die Welle 3 weist eine (kreis-)zylindrische Grundform auf. Es sind aber zwei sich in axialer Richtung (bezogen auf eine Rotationsachse 4 der Welle 3) erstreckende Nuten 5,6 in der Welle 3 ausgebildet. Ferner weist die Welle 3 eine durch quer zur Rotationsachse 4 verlaufende Kerben gebildete, sich ebenfalls in axialer Richtung erstreckende, Zahnstange 7 auf.

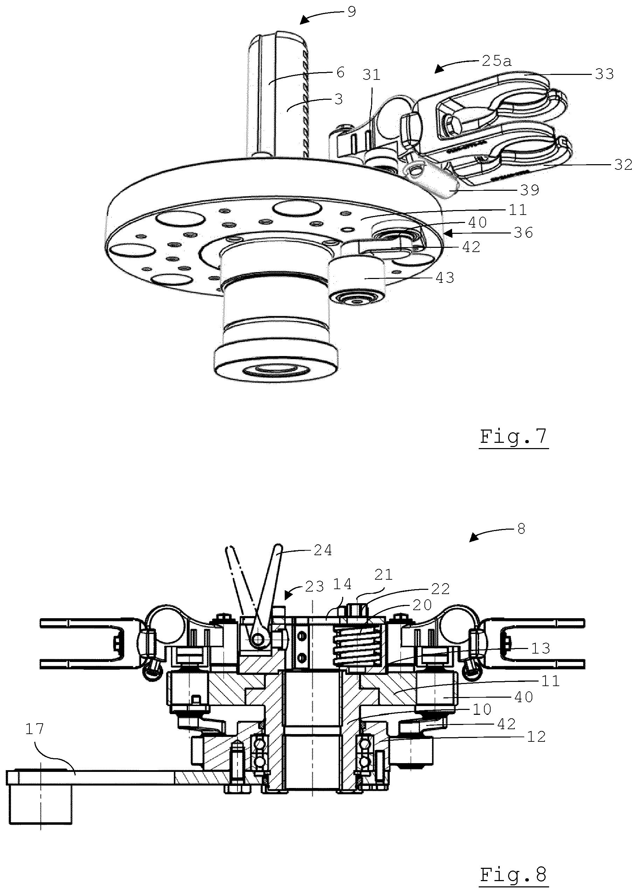

Die erste Transportvorrichtung 1 umfasst eine an der Welle 3 angeordnete Baugruppe 8 (Fig. 8). Die Baugruppe 8 ist über ein erstes Ende 9 der Welle 3 auf die Welle 3 steckbar. Sie umfasst eine Nabe 10, eine Trägerplatte 11, einen Steuerkurventräger 12 und einen Basisteil 13 eines Verstellmechanismus, welcher mit einer Abdeckplatte 14 versehen ist. Die Trägerplatte 11 ist starr mit der Nabe 10 verbunden. Der Basisteil 13 des Verstellmechanismus ist auch starr mit der Nabe 10 verbunden. Der Steuerkurventräger 12 ist um die

Nabe 10 drehbar an der Nabe 10 gelagert. Eine Rotationsachse des Steuerkurventrägers 12 ist koaxial zur Rotationsachse 4 ausgerichtet. Somit ist der Steuerkurventräger 12 gegenüber der Trägerplatte 11 in Rotationsrichtung bewegbar. In axialer Richtung sind die Teile der Baugruppe 8 jedoch zumindest in Betrieb nicht gegenüber einander beweglich. In der dargestellten Ausführungsform ist die relative axiale Position gar nicht veränderbar. In einer alternativen Ausführungsform können Mittel zum Einstellen der relativen axialen Position vorgesehen sein. Diese Einstellung würde dann aber während des Betriebs beibehalten werden.

Der Basisteil 13 ist verdrehsicher an der Welle 3 angeordnet. In der dargestellten Ausführungsform sind hierzu zwei Federn 15,16 vorgesehen, die jeweils mit einer der Nuten 5,6 zusammenwirken. Da der Basisteil 13 starr mit der Trägerplatte 11 verbunden ist, ist auch die Trägerplatte 11 verdrehsicher an der Welle 3 angeordnet.

Ein erster Arretiersteg 17 ist starr mit dem Steuerkurventräger 12 verbunden und erstreckt sich in radialer Richtung. An einem von der Rotationsachse 4 entfernten Ende weist der Arretiersteg 17 einen Durchgang auf, durch den eine Säule 18 geführt ist. Die Position der Säule 18 ist gegenüber der Rotationsachse 4 fest. Somit kann der Steuerkurventräger 12 nicht mit der Trägerplatte 11 und der Welle 3 mitdrehen.

An einem dem ersten Ende 9 gegenüberliegenden (in den Zeichnungen nicht sichtbaren) zweiten Ende ist die Welle 3 zumindest mittelbar starr und koaxial mit einer Antriebswelle 19 verbunden. Somit sind die Baugruppe 8 und die Welle 3 Teil einer Einheit, die von der Antriebswelle 19 lösbar ist. Die Verbindung mit der Antriebswelle 19 kann zum Beispiel eine Flanschverbindung umfassen.

Der Verstellmechanismus umfasst eine im Basisteil 13 drehbar gelagerte Schneckenwelle 20, welche mit der Zahnstange 7 zusammenwirkt. Die Schneckenwelle 20 ist um eine im Wesentlichen parallel zur Rotationsachse 4 ausgerichtete Drehachse 21 drehbar. Hierdurch kann der Basisteil 13 in radialer Richtung relativ kompakt gestaltet sein. Die Abdeckplatte 14 schließt die Schneckenwelle 20 in axialer Richtung im Basisteil 13 ein. Ein Endabschnitt 22 der Schneckenwelle 20 weist einen polygonalen Querschnitt auf und steht gegenüber der Abdeckplatte 14 ab. Da der Basisteil 13 den dem freien, ersten Ende 9 der Welle 3 in axialer Richtung am nächsten liegenden Teil der Baugruppe 8 bildet, ist der Endabschnitt 22 zum Anlegen eines Werkzeugs oder zum Koppeln eines Aktuators relativ gut zugänglich. Zwischen dem freien, ersten Ende 9 der Welle und der Baugruppe 8 sind keine weiteren Teile der Transportvorrichtung 1 vorgesehen.

Durch Drehen der Schneckenwelle 20 um ihre Drehachse 21 kann die axiale Position der Baugruppe 8 verstellt werden.

In der dargestellten Ausführungsform ist außerdem eine Klemmeinrichtung 23 (Fig. 8) zum Bilden einer reversibelen Reibschlussverbindung zwischen der Baugruppe 8, insbesondere dem verdrehsicher angeordneten Teil der Baugruppe 8, und der Welle 3 vorgesehen. Die Klemmeinrichtung 23 wirkt in dieser Ausführungsform unmittelbar auf die Außenfläche der Welle 3. Die Klemmeinrichtung 23 ist mittels eines Hebels 24 bedienbar. Dieser Hebel 24 steht auch gegenüber dem Basisteil 13 ab, insbesondere gegenüber der Abdeckplatte 14. Andere Arten von Klemmeinrichtungen sind möglich, beispielsweise solche, die eine Schelle oder Schlinge umfassen. Die Klemmeinrichtung 23 sichert die axiale Position der Baugruppe 8, die mittels des Verstellmechanismus eingestellt worden ist.

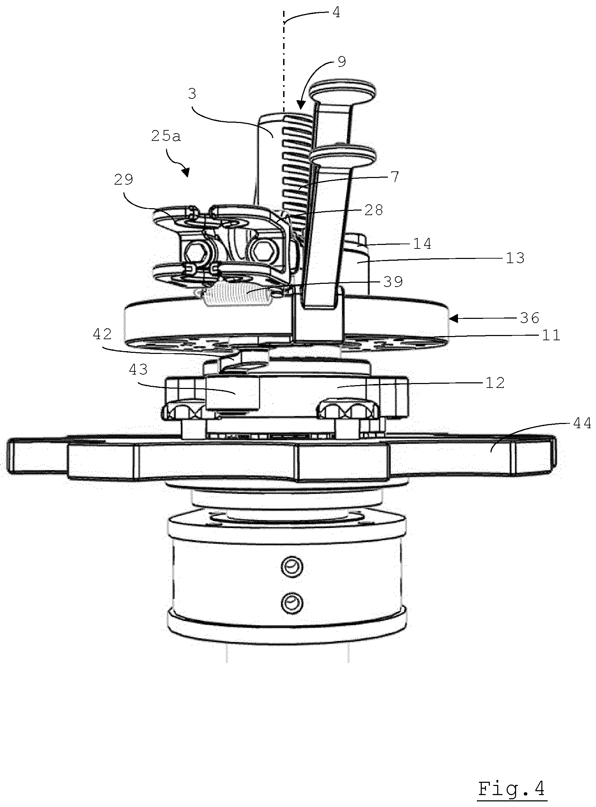

In der dargestellten Ausführungsform sind acht Greifeinrichtungen 25a-h entlang des Umfangs der Trägerplatte 11 verteilt angeordnet (Fig. 1-3). Sie sind gleich gestaltet, so dass deren Aufbau anhand einer exemplarischen Greifeinrichtung 25a (Fig. 4-7) erläutert wird.

Die Greifeinrichtung 25a weist um jeweilige Schwenkachsen 26,27 schwenkbar angeordnete Greifarme 28,29 auf. Jeder Greifarm 28,29 umfasst einen Greifarmkörper 30,31 und einen austauschbar mit diesem verbundenen Greifabschnitt 32,33. Jeder Greifarm 28,29, im Beispiel jeder Greifarmkörper 30,31, ist über ein Lagerelement 34,35 mit der Trägerplatte 11 verbunden. Die Lagerelemente 34,35 definieren die jeweiligen Schwenkachsen 26,27 der Greifarme 28,29. Zumindest die Greifabschnitte 32,33 stehen in hauptsächlich radialer Richtung gegenüber einem Umfangsrand 36 der Trägerplatte 11 vor.

Die Schwenkbewegungen der Greifarme 28,29 sind durch ineinander greifende Verzahnung synchronisiert. Zudem sind radial beabstandet zur jeweiligen Schwenkachse 26,27 zusammenwirkende Magneten 37,38 in den Greifarmen 28,29 angeordnet. Eine Rückstellvorrichtung in Form einer Rückstellfeder 39 verbindet die Greifarme 28,29. Sowohl die Magneten 37,38 als auch die Rückstellfeder 39 üben eine Kraft aus, die die Greifarme 28,29 aufeinander zu bewegt.

Die Greifeinrichtung 25a umfasst eine Schaltwelle 40, welche an der Trägerplatte 11 drehbar gelagert ist und sich durch diese hindurch in axialer Richtung erstreckt. An einem axialen Ende ist ein Steuerelement 41 angeordnet, welches bei Drehung der Schaltwelle 40 um eine Drehachse der Schaltwelle 40 eine Kraft auf wenigstens einen der Greifarme 28,29 ausübt und so ein Drehmoment erzeugt, das die Greifarme 28,29 auseinander bewegt. Dieses Drehmoment wirkt entgegen dem von den Magneten 37,38 und der Rückstellfeder 39 erzeugten Drehmoment. Am anderen Ende der Schaltwelle 40 ist ein Betätigungsabschnitt in Form eines Rollenhebels 42 angeordnet. Eine Rolle 43 des Rollenhebels 42 wird durch das durch die Magneten 37,38 und die Rückstellfeder 39 erzeugte Drehmoment gegen eine oder mehreren am Umfang des Steuerkurventrägers 12 gedrückt. Bei der Bewegung der Rolle 43 entlang der Steuerkurve oder Steuerkurven verändert sich die radiale Position der Rolle 43 (in Bezug auf die Rotationsachse 4).

Das Steuerelement 41 und der Rollenhebel 42 sind relativ zur Schaltwelle 40 im Betrieb unbeweglich angeordnet. Die Schaltwelle 40 ist axial unverschiebbar an der Trägerplatte 11 angeordnet. Da sich die axiale Entfernung des Steuerkurventrägers 12 zur Trägerplatte 11 beim Verstellen der axialen Position der Baugruppe 8 nicht ändert, bleibt die Rolle 43 in der richtigen axialen Lage in Bezug auf die Steuerkurve oder -kurven, mit der bzw. mit denen sie zusammenwirkt.

In der dargestellten Ausführungsform umfasst die erste Transportvorrichtung auch noch eine Grundplatte 44 mit Einbuchtungen zur Aufnahme eines Flaschenbauchs. Die Grundplatte 44 ist im Beispiel zweiteilig ausgeführt und entfernbar. Sie ist um eine Drehachse drehbar, welche koaxial zur Rotationsachse 4 ausgerichtet ist. Die Drehbewegung ist mit der der Welle 3 gekoppelt. Die axiale Position der Grundplatte 44 ist jedoch nicht zusammen mit der der Baugruppe 8 verstellbar. Somit kann die erste Transportvorrichtung 1 Behältern unterschiedlicher Höhe angepasst werden.

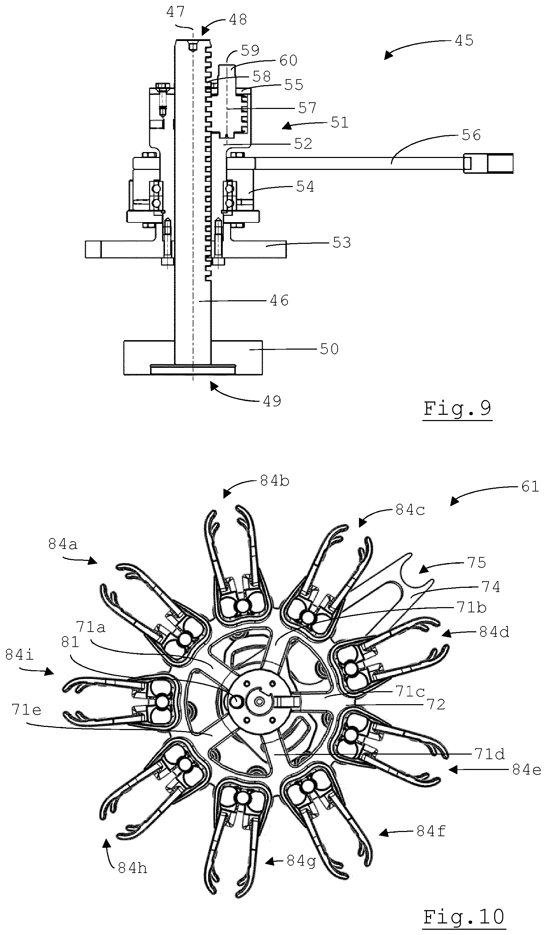

Eine abgewandelte Variante 45 (Fig. 9) der ersten Transportvorrichtung 1 umfasst auch eine Welle 46, welche um eine Rotationsachse 47 drehbar ist. Sie weist ein erstes axiales Ende 48 und ein gegenüberliegendes zweites axiales Ende 49 auf. Das erste Ende 48 ist ein im Betrieb freies Ende. Am zweiten Ende 49 ist ein Flansch 50 zum lösbaren Verbinden der Welle 46 mit einer (nicht dargestellten) Antriebswelle vorgesehen.

Die Vorrichtungsvariante 45 umfasst auch eine an der Welle 46 angeordnete Baugruppe 51. Die Baugruppe 51 ist über das erste Ende 48 der Welle 46 auf die Welle 46 steckbar. Sie umfasst eine Nabe 52, eine Trägerplatte 53 und einen Steuerkurventräger 54. Wo die erste Transportvorrichtung 1 noch einen Basisteil 13 eines Verstellmechanismus umfasste, ist dieser in der Vorrichtungsvariante 45 in die Nabe 52 integriert. Die Nabe 52 ist mit einer Abdeckplatte 55 versehen.

Die Trägerplatte 53 ist starr mit der Nabe 52 verbunden. Der Steuerkurventräger 54 ist um die Nabe 52 drehbar an der Nabe 52 gelagert. Eine Rotationsachse des Steuerkurventrägers 54 ist koaxial zur Rotationsachse 47 ausgerichtet. Somit ist der Steuerkurventräger 54 gegenüber der Trägerplatte 53 in Rotationsrichtung bewegbar. In axialer Richtung sind die Teile der Baugruppe 51 jedoch zumindest in Betrieb nicht gegenüber einander beweglich.

Die Nabe 52 ist in gleicher Weise wie der Basisteil 13 verdrehsicher an der Welle 46 angeordnet. Da die Nabe 52 starr mit der Trägerplatte 53 verbunden ist, ist auch die Trägerplatte 53 verdrehsicher an der Welle 46 angeordnet.

Ein Arretiersteg 56 ist starr mit dem Steuerkurventräger 54 verbunden und erstreckt sich in radialer Richtung. An einem von der Rotationsachse 47 entfernten Ende weist der Arretiersteg 56 einen Durchgang auf, durch den eine Säule führbar ist, deren Position gegenüber der Rotationsachse 47 fest ist. Somit kann der Steuerkurventräger 54 nicht mit der Trägerplatte 53 und der Welle 46 mitdrehen.

Der Verstellmechanismus zum Verstellen der axialen Position der Baugruppe 51 umfasst eine in der Nabe 52 drehbar gelagerte Schneckenwelle 57, welche mit einer in der Welle 46 ausgebildeten Zahnstange 58 zusammenwirkt. Die Schneckenwelle 57 ist um eine im Wesentlichen parallel zur Rotationsachse 47 ausgerichtete Drehachse 59 drehbar. Die Abdeckplatte 55 schließt die Schneckenwelle 57 in axialer Richtung in der Nabe 52 ein. Ein Endabschnitt 60 der Schneckenwelle 57 weist einen polygonalen Querschnitt auf und steht gegenüber der Abdeckplatte 55 ab. Da der Abschnitt der Nabe 52, in dem die Schneckenwelle 57 angeordnet ist, den dem freien, ersten Ende 48 der Welle 46 in axialer Richtung am nächsten liegenden Teil der Baugruppe 51 bildet, ist der Endabschnitt 60 zum Anlegen eines Werkzeugs oder zum Koppeln eines Aktuators relativ gut zugänglich. Zwischen dem freie, ersten Ende 48 der Welle und der Baugruppe 51 sind keine weiteren Teile der Transportvorrichtungsvariante 45 vorgesehen.

Durch Drehen der Schneckenwelle 57 um ihre Drehachse 59 kann die axiale Position der Baugruppe 51 verstellt werden. Eine (nicht dargestellte) Klemmeinrichtung wie die Klemmeinrichtung 23 der ersten Transportvorrichtung 1 kann zum Sichern dieser Position vorgesehen sein.

Man erkennt also, dass die Baugruppe 51 nicht einfach eine umgekehrte Version der Baugruppe 8 der ersten Transportvorrichtung 1 ist. Die Schneckenwelle 57 ist immer an einem dem ersten, freien Ende 48 der Welle 46 in axialer Richtung näher als die Trägerplatte 53 gelegenen Abschnitt der Baugruppe 51 angeordnet. Hierdurch erschweren die (in der Fig. 9 nicht dargestellten) an der Trägerplatte 53 angeordneten Greifeinrichtungen nicht den Zugang zum Verstellmechanismus.

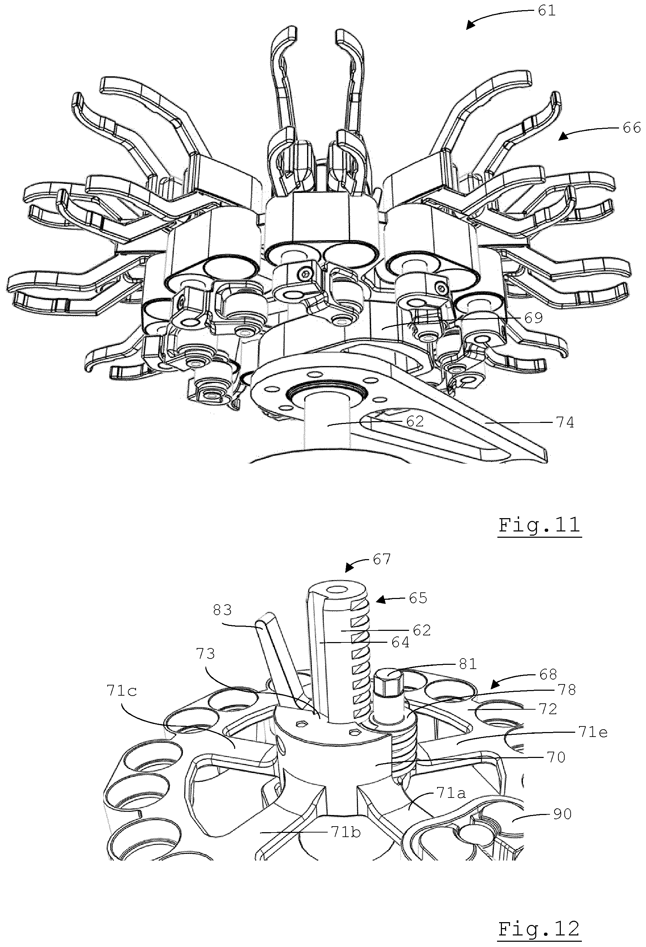

Diese Prinzip kommt auch in einer zweiten Transportvorrichtung 61 (Fig. 10-16) zur Anwendung.

Die zweite Transportvorrichtung 61 umfasst auch eine Welle 62, die eine (kreis-)zylindrische Grundform aufweist. Es ist jedoch eine einzige sich in axialer Richtung (bezogen auf eine Rotationsachse 63 der Welle 62) erstreckende Nut 64 in der Welle 62 ausgebildet. Ferner weist die Welle 62 eine durch quer zur Rotationsachse 63 verlaufende Kerben gebildete, sich ebenfalls in axialer Richtung erstreckende, Zahnstange 65 auf.

Die zweite Transportvorrichtung 61 umfasst ebenfalls eine an der Welle 62 angeordnete Baugruppe 66. Die Baugruppe 66 ist über ein erstes Ende 67 der Welle 62 auf die Welle 62 steckbar. Diese Baugruppe 66 umfasst ein Trägerrad 68 und einen Steuerkurventräger 69.

Das Trägerrad 68 weist eine integrale Nabe 70, als Verbindungsstege fungierende Speichen 71a-e und einen umlaufenden Umfangsabschnitt 72 auf. In einer alternativen Ausführungsform kann das Trägerrad 68 mehrteilig ausgebildet sein. Die einteilige Gestaltung führt jedoch zu einer Gewichtsersparnis und einer Verringerung der Massenträgheit.

Der Steuerkurventräger 69 ist um die Nabe 70 drehbar an der Nabe 70 gelagert. Eine Rotationsachse des Steuerkurventrägers 69 ist koaxial zur Rotationsachse 63 ausgerichtet. Somit ist der Steuerkurventräger 69 gegenüber dem Trägerrad 68 in Rotationsrichtung bewegbar. In axialer Richtung sind die Teile der Baugruppe 66 jedoch zumindest in Betrieb nicht gegenüber einander beweglich.

Die Nabe 70 ist mittels eines in die Nut 64 greifenden Abschnitts 73 verdrehsicher an der Welle 62 angeordnet.

Ein Arretiersteg 74 ist starr mit dem Steuerkurventräger 69 verbunden und erstreckt sich in radialer Richtung. An einem von der Rotationsachse 63 entfernten Ende weist der Arretiersteg 74 eine Gabelung 75 auf, mit der er durch einen der Säule 18 vergleichbaren Gegenstand gehalten werden kann. Somit kann der Steuerkurventräger 69 nicht mit dem Trägerrad 68 mitdrehen.

An einem dem ersten Ende 67 gegenüber liegenden zweiten Ende 76 ist die Welle 62 zumindest mittelbar starr und koaxial mit einer Antriebswelle verbindbar. Hierzu ist ein Flansch 77 vorgesehen. Somit sind die Baugruppe 66 und die Welle 62 Teil einer Einheit, die mit einer Antriebswelle verbindbar und von dieser wieder relativ einfach lösbar ist.

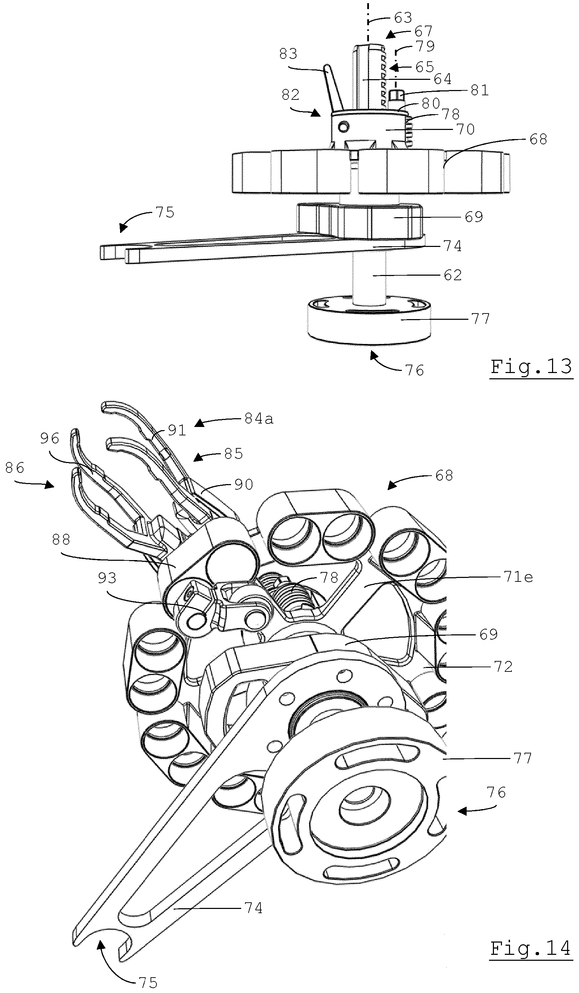

Der Verstellmechanismus umfasst eine an der Nabe 70 drehbar gelagerte Schneckenwelle 78, welche mit der Zahnstange 65 zusammenwirkt. Die Schneckenwelle 78 ist um eine im Wesentlichen parallel zur Rotationsachse 63 ausgerichtete Drehachse 79 drehbar. Hierdurch kann die Nabe 70 in radialer Richtung relativ kompakt gestaltet sein. Diese Wirkung wird dadurch verstärkt, dass die Nabe 70 im Bereich der Schneckenwelle 78 zur Seite hin offen ist. Eine Abdeckplatte 80 (Fig. 13) schließt die Schneckenwelle 78 jedoch in axialer Richtung in der Nabe 70 ein.

Ein Endabschnitt 81 der Schneckenwelle 78 weist einen polygonalen Querschnitt auf und steht gegenüber der Abdeckplatte 80 ab. Da der Abschnitt der Nabe 70, an dem die Schneckenwelle 78 gelagert ist, den dem freien, ersten Ende 67 der Welle 62 in axialer Richtung am nächsten liegenden Teil der Baugruppe 66 bildet, ist der Endabschnitt 81 zum Anlegen eines Werkzeugs oder zum Koppeln eines Aktuators verhältnismäßig gut zugänglich. Zwischen dem freien, ersten Ende 67 der Welle und der Baugruppe 66 sind keine weiteren Teile der Transportvorrichtung 61 vorgesehen.

Durch Drehen der Schneckenwelle 78 um ihre Drehachse 79 kann die axiale Position der Baugruppe 66 verstellt werden.

In der dargestellten Ausführungsform ist außerdem eine Klemmeinrichtung 82 (Fig. 13) zum Bilden einer reversibelen Reibschlussverbindung zwischen der Baugruppe 66, insbesondere dem verdrehsicher angeordneten Teil der Baugruppe 66, und der Welle 62 vorgesehen. Die Klemmeinrichtung 82 wirkt in dieser Ausführungsform unmittelbar auf die Außenfläche der Welle 62. Die Klemmeinrichtung 82 ist mittels eines Hebels 83 bedienbar. Dieser Hebel 83 steht auch gegenüber der Nabe 70, insbesondere gegenüber der Abdeckplatte 80, ab. Andere Arten von Klemmeinrichtungen sind möglich, beispielsweise solche, die eine Schelle oder Schlinge umfassen. Die Klemmeinrichtung 82 sichert die axiale Position der Baugruppe 66, die mittels des Verstellmechanismus eingestellt worden ist.

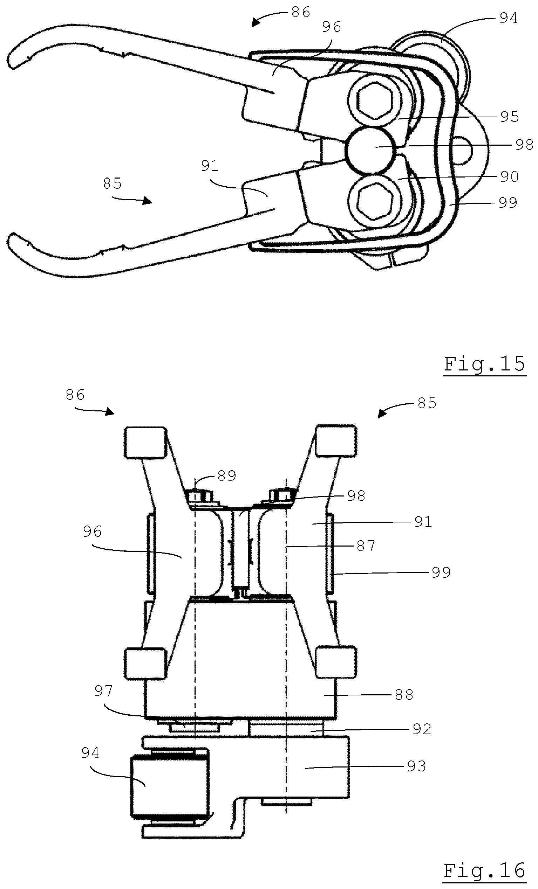

In der dargestellten Ausführungsform sind neun Greifeinrichtungen 84a-i verteilt entlang des Umfangs des Trägerrads 68, insbesondere entlang des Umfangsabschnitts 72, angeordnet. Sie sind gleich gestaltet, so dass deren Aufbau anhand einer exemplarischen Greifeinrichtung 84 (Fig. 15-16) erläutert wird. Nähere Einzelheiten der Greifeinrichtung 84 sind außerdem der europäischen Patentanmeldung Nr. 21170053.9 vom 23. April 2021 zu entnehmen.

Die Greifeinrichtung 84a umfasst einen ersten Arm 85 und einen zweiten Arm 86. Der erste Arm 85 und der zweite Arm 86 bilden ein Greifarmpaar. In der dargestellten Ausführungsform ist pro Greifeinrichtung nur ein einziges Greifarmpaar vorgesehen. Es können aber auch mehr als ein Greifarmpaar vorgesehen sein.

Der erste Arm 85 ist um eine erste Schwenkachse 87 (Fig. 16) drehbar an einem Doppelgehäuse 88 gelagert. Der zweite Arm 86 ist um eine zweite Schwenkachse 89 drehbar an dem Doppelgehäuse 88 gelagert. In einer alternativen Ausführungsform können gesonderte Gehäusen an der Stelle des Doppelgehäuses 88 vorgesehen sein.

In der Umsetzung in der zweiten Transportvorrichtung 61 ist das Doppelgehäuse 88 integraler Bestandteile des Trägerrads 68, das heißt einstückig mit diesem ausgebildet. Dies verringert den Montageaufwand.

Die Schwenkachsen 87,89 sind im Wesentlichen parallel zueinander und, in der dargestellten Ausführungsform, auch im Wesentlichen parallel zur Rotationsachse 63 der Baugruppe 66 ausgerichtet.

Man kann sich eine Mittelebene vorstellen, die parallel zu den beiden Schwenkachsen 87,89 zwischen den beiden Armen 85,86 verläuft und der sich die Arme 85,86 beim Schließen des Greifarmpaars nähern und von der sie sich beim Öffnen entfernen. In einer Draufsicht parallel zu den Schwenkachsen 87,89 ergibt sich eine Mittellinie. Wenn die Arme 85,86, wie vorliegend, symmetrisch angeordnet sind, bildet die Mittellinie zumindest annähernd eine Öffnungswinkelhalbierende.

Um dies sicherzustellen, sind die Schwenkbewegungen des ersten Arms 85 und des zweiten Arms 86 gekoppelt, obwohl die Steuerkomponente der Transportvorrichtung nur ein auf den ersten Arm 85 ausgeübtes Drehmoment erzeugt.

Der erste Arm 85 ist in der dargestellten Ausführungsform (Fig. 15-16) aus zwei Teilen aufgebaut, nämlicher aus einem innenliegenden ersten Armteil 90 und einem außenliegenden zweiten Armteil 91. Der erste Armteil 90 ist ein im Wesentlichen massiver Körper. Der zweite Armteil 91 fungiert als Schwencklammer. Der zweite Armteil 91 umfasst zwei in axialer Richtung (bezogen auf die erste Schwenkachse 87) gespreizte Finger, deren freie Enden freie Enden des ersten Arms 85 bilden. In der dargestellten Ausführungsform sind die Finger der Kontur eines Flaschenhalses angepasst, also gekrümmt. Der zweite Armteil 91 ist austauschbar.

Der erste Armteil 90 ist auf eine Schaltwelle 92 verdrehsicher fixiert. Die Schaltwelle 92 ist am Doppelgehäuse 88 gelagert und durch dieses geführt. An einem axialen Ende der Schaltwelle 92 ist ein sich von dieser erstreckender Rollenhebel 93 angeordnet.

Der Rollenhebel 93 weist eine drehbar gelagerte Rolle 94 auf. Diese ist dazu eingerichtet, der durch den Steuerkurventräger 69 definierten Steuerkurve zu folgen, wenn die Greifeinrichtung 84a durch die relative Rotation des Trägerrads 68 an der Steuerkurve vorbeigeführt wird. Dabei wird ein Drehmoment erzeugt, das auf den ersten Arm 85 ausgeübt wird. Der erste Arm 85 überträgt eine Kraft auf den zweiten Arm 86, so dass einzig die auf den einen Betätigungsteil ausgeübte externe Kraft beide Arme 85,86 bewegt. In der dargestellten Ausführungsform öffnet sich dabei das Greifarmpaar entgegen einer Rückstellkraft. Prinzipiell ist aber auch eine Ausführungsform denkbar, in der sich das Greifarmpaar entgegen einer Rückstellkraft schließt und der Betätigungsteil zum Öffnen des Greifarmpaars eingerichtet ist.

Da der Rollenhebel 93 axial beabstandet zum ersten Arm 85 angeordnet ist, können er und zumindest einer der Arme 85,86 sich, parallel zu den Schwenkachsen 87,89 betrachtet, überdecken. Dadurch ist der Fußabdruck der Greifeinrichtung 84a relativ klein.

Der zweite Arm 86 ist in der dargestellten Ausführungsform ebenfalls aus zwei Teilen aufgebaut, nämlicher aus einem innenliegenden ersten Armteil 95 und einem außenliegenden zweiten Armteil 96. Der erste Armteil 95 ist ein im Wesentlichen massiver Körper. Der zweite Armteil 96 fungiert als Schwenkklammer. In der dargestellten Ausführungsform ist der zweite Teil 91 des ersten Arms 85 das Spiegelbild des zweiten Teils 96 des zweiten Arms 86. Da sie selbst in Bezug auf eine Symmetrieebene quer zu den Schwenkachsen 87,89 symmetrisch sind, sind die zweiten Armteile 91,96 sogar baugleich, nur umgekehrt angeordnet montiert.

Der erste Armteil 95 des zweiten Arms 86 ist das Spiegelbild des ersten Armteils 90 des ersten Arms 85. Allerdings weist er in der dargestellten Ausführungsform eine runde Bohrung auf, durch die eine zweite Welle 97 geführt ist. Diese ist im Doppelgehäuse 88 drehbar gelagert und durch dieses geführt.

Die zweiten Armteile 91,96 stehen gegenüber dem Umfangabschnitt 72 des Trägerrads 68 radial nach außen vor.

Im ersten Teil 90 des ersten Arms 85 und im ersten Teil 95 des zweiten Arms 86 sind zueinander und zur oben erwähnten Mittelebene gewandte Ausnehmungen ausgebildet. Die Ausnehmungen sind im Wesentlichen rillenförmig gestaltet, allerdings in axialer Richtung an den näher zum Doppelgehäuse 88 gelegenen jeweiligen Enden begrenzt. Auf diesen Begrenzungen stützt sich ein zwischen den Ausnehmungen gehaltener Kraftübertragungskörper 98 ab.

Die Ausnehmungen weisen eine in axialer Richtung betrachtet runde Innenkontur auf. Sie umgeben den Kraftübertragungskörper 98 soweit, dass über diesen eine überwiegend parallel zur oben erwähnten Mittelebene gerichtete Kraft übertragen werden kann. Ein Abschnitt des ersten Teils 90 des ersten Arms 85 und ein Abschnitt des ersten Teils 95 des zweiten Arms 86 begrenzen einen jeweiligen Abschnitt einer Innenfläche der ersten Ausnehmung bzw. der zweiten Ausnehmung. Diese Flächenabschnitte weisen eine jeweilige Normale auf, die eine Hauptkomponente parallel zur oben erwähnten Mittelebene aufweist, zumindest in geschlossenem Zustand des Greifarmpaars. Außerdem ist sie zwischen den Schwenkachsen 87,89, aber beabstandet zur jeweiligen Schwenkachse 87,89 gelegen. Somit wird durch die übertragene Kraft ein Drehmoment erzeugt.

Eine die Arme 85,86 umklammernde Feder 73 übt eine Rückstellkraft aus, im vorliegenden Fall eine Schließkraft. In anderen Ausführungsformen können zusätzlich oder alternativ andere Einrichtungen zum Ausüben einer Rückstellkraft vorgesehen sein. Beispiele sind der WO 2020/108758 A1 zu entnehmen.

Der Kraftübertragungskörper 98 ist in der dargestellten Ausführungsform ein länglicher Körper. Aufgrund der Form der Ausnehmungen erstreckt sich die Längsachse des Kraftübertragungskörpers im Wesentlichen in axialer Richtung, bezogen auf die Schwenkachsen 87,89. In einer alternativen Ausführungsform kann der Kraftübertragungskörper 98 kugelförmig und können die Ausnehmungen zylindrisch oder sphärisch gestaltet sein. In der dargestellten Ausführungsform ist der Kraftübertragungskörper 98 als Zylinder mit kreisrundem Querschnitt gestaltet. Eine zylindrische Form mit polygonalem Querschnitt ist auch möglich. Die runde Form führt jedoch zu einer gleichmäßigeren Kraftübertragung und demzufolge zu weniger Verschleiß und Abrieb.

Wie sie in den Fig. 15 und 16 dargestellt ist, ist die Schaltwelle 92 mit dem ersten Arm 85 verbunden. Bei den Greifeinrichtungen 84a-i der zweiten Transportvorrichtung 61 wie sie in den Fig. 10-14 dargestellt ist, ist es der zweite Arm 86. Beide Anordnungen sind also möglich. Es ist lediglich der Rollenhebel 93 der Anordnung und der Rotationsrichtung entsprechend anzuordnen.

Die Greifeinrichtung 84a weist in montiertem Zustand in der Baugruppe 66 nur eine geringe Erstreckung in Richtung der Rotationsachse auf. Zudem ist sie aus relativ wenig Bauteilen herstellbar. Das Doppelgehäuse 88 ist in radialer Richtung (bezogen auf die Rotationsachse 63) relativ kompakt, da nur die Schaltwelle 92 und die zweite Welle 62 in ihm gelagert sind. Dies ist darauf zurückzuführen, dass der erste Arm 85 unmittelbar auf der Schaltwelle 92 montiert ist. Der Kraftübertragungskörper 98 und die Rückstellfeder 73 bewirken, dass die Schwenkbewegungen der zwei Arme 85,86 dennoch synchronisiert sind.

Die Schaltwelle 92 wird in axialer Richtung mit der Baugruppe 66 verstellt. Dadurch ist sie relativ kurz.

Die zweite Transportvorrichtung 61 ist kompakt und leicht. Außerdem ist der Verstellmechanismus gut zugänglich. Dies gilt auch für die Greifeinrichtungen 84a-i.

Die Erfindung ist nicht auf die dargestellten Ausführungsformen beschränkt, welche innerhalb des durch die Ansprüche vorgegebenen Rahmens variiert werden können. Der Steuerkurventräger 12,69 kann zum Beispiel als (kreis-)zylindrischer Trommel gestaltet sein, an dessen Mantelfläche diskrete Körper, die die eigentlichen Steuerkurvenabschnitte definieren, lösbar befestigt sind. So kann die Transportvorrichtung noch flexibler für einen bestimmten Einsatz optimiert werden.

Ausführungen können den folgenden Aspekten entsprechen:
1. Vorrichtung zum Greifen und Transportieren von Gegenständen 2, beispielsweise Behältern, umfassend:
   eine Welle 3;46;62;
   eine Anordnung 8;51;66, welche zumindest einen Träger 11;53;68 umfasst, der verdrehsicher an der Welle 3;46;62 angeordnet ist,
   wobei eine axiale Position der Anordnung 8;51;66 entlang der Welle 3;46;62 verstellbar ist; und
   wenigstens eine am Träger 11;53;68 angeordnete Greifeinrichtung 25a-h;84a-i,
   wobei jede Greifeinrichtung 25a-h;84a-i ein Greifarmpaar 28,29;85,86 zum Greifen eines der Gegenstände 2 umfasst, **dadurch gekennzeichnet, dass**
   die Vorrichtung einen Verstellmechanismus zum Verstellen der axialen Position der Anordnung 8;51;66 entlang der Welle 3;46;62 umfasst,
   der eine an der Welle 3;46;62 ausgebildete Zahnstange 7;58;65 und eine in der Anordnung 8;51;66 drehbar gelagerte und mit der Zahnstange 7;58;65 zusammenwirkende Getriebewelle 20;57;78 umfasst.
2. Vorrichtung nach Aspekt 1,
   wobei die Getriebewelle 20;57;78 um eine im Wesentlichen parallel zur Zahnstange 7;58;65 ausgerichtete Drehachse 21;59;79 drehbar gelagert ist.
3. Vorrichtung nach Aspekt 1 oder 2,
   wobei die Getriebewelle 20;57;78 eine Schneckenwelle ist.
4. Vorrichtung nach einem der vorhergehenden Ansprüche,
   wobei die Anordnung 8;51;66 über ein erstes axiales Ende 9;48;67 der Welle 3;46;62 auf die Welle 3;46;62 steckbar beziehungsweise von der Welle 3;46;62 abziehbar ist, und
   wobei die Welle 3;46;62 an einem gegenüberliegenden zweiten Ende 49;76 koaxial mit einer Antriebswelle 19 verbindbar ist.
5. Vorrichtung nach Aspekt 4,
   wobei am zweiten Ende 49;76 ein Verbindungsflansch 50;77 zum Verbinden der Welle 46;62 mit der Antriebswelle 19 vorgesehen ist.
6. Vorrichtung nach einem der vorhergehenden Aspekte,
   wobei die Anordnung 8;51;66 über ein erstes axiales Ende 9;48;67 der Welle 3;46;62 auf die Welle 3;46;62 steckbar beziehungsweise von der Welle 3;46;62 abziehbar ist, und
   wobei die Getriebewelle 20;57;78 in einem Teil der Anordnung 8;51;66 drehbar gelagert ist, der an einem dem ersten Ende 9;48;67 am nächsten liegenden Ende der Anordnung 8;51;66 angeordnet ist.
7. Vorrichtung nach einem der vorhergehenden Aspekte,
   wobei die Getriebewelle 20;57;78 an einem Ende einen Abschnitt 22;60;81 zum Koppeln zumindest eines eines Werkzeugs oder eines Aktuators aufweist.
8. Vorrichtung nach Aspekt 6 und 7,
   wobei der Abschnitt 22;60;81 an einem dem ersten Ende 9;48;67 am nächsten liegenden Ende der Getriebewelle 20;57;78 angeordnet ist.
9. Vorrichtung nach einem der vorhergehenden Aspekte, ferner umfassend eine Einrichtung 23;82 zum Bilden einer reversibelen Reibschlussverbindung zwischen der Anordnung 8;51;66 und der Welle 3;46;62.
10. Vorrichtung nach einem der vorhergehenden Aspekte,
   wobei jede Greifeinrichtung 25a-h;84a-i wenigstens einen Betätigungsabschnitt 42;93 aufweist, eingerichtet, um bei Betätigung ein Schwenken wenigstens eines der Arme 28,29;85,86 des Greifarmpaares um eine jeweilige Schwenkachse 87,89 zu bewirken, und
   wobei die Anordnung 8;51;66 wenigstens eine Komponente 12;54;69 umfasst, welche relativ zum Träger 11;53;68 in Rotationsrichtung bewegbar und dazu eingerichtet ist, bei Drehung der Welle 3;46;62 den jeweiligen Betätigungsabschnitt 42;93 der Greifeinrichtung 25a-h;84a-i zum Schwenken des wenigstens einen Arms 28,29;85,86 zu betätigen.
11. Vorrichtung nach Aspekt 10
   ferner umfassend wenigstens einen starr mit der wenigstens einen Komponente 12;54;69 verbundenen Arretiersteg 17;56;74, welche sich in hauptsächlich radialer Richtung erstreckt und zum Koppeln mit einem gegenüber der Welle 3;46;62 stationären Gegenstand 18 eingerichtet ist.
12. Vorrichtung nach Aspekt 10 oder 11,
   wobei jede Greifeinrichtung 25a-h;84a-i wenigstens eine durch Betätigung eines der wenigstens einen Betätigungsabschnitte 42;93 um eine Schwenkachse 87 drehbar angeordnete Schaltwelle 40;92 umfasst,
   wobei die Schaltwelle 40;92 mit der Anordnung 8;51;66 axial verstellbar ist.
13. Vorrichtung nach Aspekt 12,
   wobei der Betätigungsabschnitt 42;93 einen an der Schaltwelle 40;92 angeordneten, sich von dieser erstreckenden Hebel, beispielsweise in Form eines Rollenhebels, umfasst.
14. Vorrichtung nach Aspekt 12 oder 13,
   wobei jede Greifeinrichtung 25a-h;84a-i derart ausgebildet ist, dass Schwenkbewegungen der Arme 28,29;85,86 eines Greifarmpaares um ihre jeweiligen Schwenkachsen 87;89 gekoppelt sind.
15. Vorrichtung nach einem der Aspekte 12-14,
   wobei jede Greifeinrichtung 25a-h;84a-i eine Einrichtung 37,38,39;99 zum Erzeugen einer Rückstellkraft, welche zu einem auf die Schaltwelle 40;92 wirkenden Drehmoment führt, umfasst.

### Bezugszeichenliste

- 1 -: 1. Transportvorrichtung
- 2 -: Flasche
- 3 -: Welle
- 4 -: Rotationsachse
- 5 -: 1 Nut
- 6 -: 2. Nut
- 7 -: Zahnstange
- 8 -: Axial positionierbare Baugruppe
- 9 -: 1. Wellenende
- 10 -: Nabe
- 11 -: Trägerplatte
- 12 -: Steuerkurventräger
- 13 -: Basisteil
- 14 -: Abdeckplatte
- 15 -: 1. Feder
- 16 -: 2. Feder
- 17 -: Arretiersteg
- 18 -: Säule
- 19 -: Antriebswelle
- 20 -: Schneckenwelle
- 21 -: Drehachse
- 22 -: Endabschnitt
- 23 -: Klemmeinrichtung
- 24 -: Hebel
- 25a-h -: Greifeinrichtungen
- 26 -: Linke Schwenkachse
- 27 -: Rechte Schwenkachse
- 28 -: Linker Greifarm
- 29 -: Rechter Greifarm
- 30 -: Linker Greifarmkörper
- 31 -: Rechter Greifarmkörper
- 32 -: Linker Greifabschnitt
- 33 -: Rechter Greifabschnitt
- 34 -: Linkes Lagerelement
- 35 -: Rechtes Lagerelement
- 36 -: Umfangsrand
- 37 -: Linker Magnet
- 38 -: Rechter Magnet
- 39 -: Rückstellfeder
- 40 -: Schaltwelle
- 41 -: Steuerelement
- 42 -: Rollenhebel
- 43 -: Rolle
- 44 -: Grundplatte
- 45 -: Vorrichtungsvariante
- 46 -: Welle
- 47 -: Rotationsachse
- 48 -: 1. Ende
- 49 -: 2. Ende
- 50 -: Flansch
- 51 -: Baugruppe
- 52 -: Nabe
- 53 -: Trägerplatte
- 54 -: Steuerkurventräger
- 55 -: Abdeckplatte
- 56 -: Arretiersteg
- 57 -: Schneckenwelle
- 58 -: Zahnstange
- 59 -: Drehachse
- 60 -: Endabschnitt
- 61 -: 2. Transportvorrichtung
- 62 -: Welle
- 63 -: Rotationsachse
- 64 -: Nut
- 65 -: Zahnstange
- 66 -: Baugruppe
- 67 -: 1. Ende
- 68 -: Trägerrad
- 69 -: Steuerkurventräger
- 70 -: Nabe
- 71a-e -: Speichen
- 72 -: Umfangsabschnitt
- 73 -: Eingreifender Abschnitt
- 74 -: Arretiersteg
- 75 -: Gabelung
- 76 -: 2. Ende
- 77 -: Flansch
- 78 -: Schneckenwelle
- 79 -: Drehachse
- 80 -: Abdeckplatte
- 81 -: Endabschnitt
- 82 -: Klemmeinrichtung
- 83 -: Hebel
- 84a-i -: Greifeinrichtungen
- 85 -: 1. Arm
- 86 -: 2. Arm
- 87 -: 1. Schwenkachse
- 88 -: Doppelgehäuse
- 89 -: 2. Schwenkachse
- 90 -: 1. Teil des 1. Arms
- 91 -: 2. Teil des 1. Arms
- 92 -: Schaltwelle
- 93 -: Rollenhebel
- 94 -: Rolle
- 95 -: 1. Teil des 2. Arms
- 96 -: 2. Teil des 2. Arms
- 97 -: 2. Welle
- 98 -: Kraftübertragungskörper
- 99 -: Rückstellfeder

## Patentansprüche

1. Vorrichtung zum Greifen und Transportieren von Gegenständen (2), beispielsweise Behältern, umfassend:
eine Welle (3;46;62);
eine Anordnung (8;51;66), welche zumindest einen als Trägerrad gestalteten Träger (11;53;68) umfasst, der verdrehsicher an der Welle (3;46;62) angeordnet ist,
wobei eine axiale Position der Anordnung (8;51;66) entlang der Welle (3;46;62) verstellbar ist; und
mehrere fest am Träger (11;53;68) entlang des Umfangs des Trägers (11;53;68) angeordnete Greifeinrichtungen (25a-h;84a-i),
wobei jede Greifeinrichtung (25a-h;84a-i) ein Greifarmpaar (28,29;85,86) zum Greifen eines der Gegenstände (2) umfasst,
wobei sich die Greifarmpaare (28,29;85,86) hauptsächlich in radialer Richtung erstrecken,
wobei mit der Vorrichtung in einer Drehstellung ein Gegenstand zwischen die Arme einer der Greifeinrichtungen (25a-h;84a-i) geführt und festgegriffen und in einer weiteren Drehstellung wieder losgelassen werden kann,
**dadurch gekennzeichnet, dass**
die Vorrichtung einen Verstellmechanismus zum Verstellen der axialen Position der Anordnung (8;51;66) entlang der Welle (3;46;62) umfasst,
der eine an der Welle (3;46;62) ausgebildete Zahnstange (7;58;65) und eine in der Anordnung (8;51;66) drehbar gelagerte und mit der Zahnstange (7;58;65) zusammenwirkende Getriebewelle (20;57;78) umfasst.

2. Vorrichtung nach Anspruch 1,
wobei die Getriebewelle (20;57;78) um eine im Wesentlichen parallel zur Zahnstange (7;58;65) ausgerichtete Drehachse (21;59;79) drehbar gelagert ist.

3. Vorrichtung nach Anspruch 1 oder 2,
wobei die Getriebewelle (20;57;78) eine Schneckenwelle ist.

4. Vorrichtung nach einem der vorhergehenden Ansprüche,
wobei die Anordnung (8;51;66) über ein erstes axiales Ende (9;48;67) der Welle (3;46;62) auf die Welle (3;46;62) steckbar beziehungsweise von der Welle (3;46;62) abziehbar ist, und
wobei die Welle (3;46;62) an einem gegenüberliegenden zweiten Ende (49;76) koaxial mit einer Antriebswelle (19) verbindbar ist.

5. Vorrichtung nach Anspruch 4,
wobei am zweiten Ende (49;76) ein Verbindungsflansch (50;77) zum Verbinden der Welle (46;62) mit der Antriebswelle (19) vorgesehen ist.

6. Vorrichtung nach einem der vorhergehenden Ansprüche,
wobei die Anordnung (8;51;66) über ein erstes axiales Ende (9;48;67) der Welle (3;46;62) auf die Welle (3;46;62) steckbar beziehungsweise von der Welle (3;46;62) abziehbar ist, und
wobei die Getriebewelle (20;57;78) in einem Teil der Anordnung (8;51;66) drehbar gelagert ist, der an einem dem ersten Ende (9;48;67) am nächsten liegenden Ende der Anordnung (8;51;66) angeordnet ist.

7. Vorrichtung nach einem der vorhergehenden Ansprüche,
wobei die Getriebewelle (20;57;78) an einem Ende einen Abschnitt (22;60;81) zum Koppeln zumindest eines eines Werkzeugs oder eines Aktuators aufweist.

8. Vorrichtung nach Anspruch 6 und 7,
wobei der Abschnitt (22;60;81) an einem dem ersten Ende (9;48;67) am nächsten liegenden Ende der Getriebewelle (20;57;78) angeordnet ist.

9. Vorrichtung nach einem der vorhergehenden Ansprüche, ferner umfassend eine Einrichtung (23;82) zum Bilden einer reversibelen Reibschlussverbindung zwischen der Anordnung (8;51;66) und der Welle (3;46;62).

10. Vorrichtung nach einem der vorhergehenden Ansprüche,
wobei jede Greifeinrichtung (25a-h;84a-i) wenigstens einen Betätigungsabschnitt (42;93) aufweist, eingerichtet, um bei Betätigung ein Schwenken wenigstens eines der Arme (28,29;85,86) des Greifarmpaares um eine jeweilige Schwenkachse (87,89) zu bewirken, und
wobei die Anordnung (8;51;66) wenigstens eine Komponente (12;54;69) umfasst, welche relativ zum Träger (11;53;68) in Rotationsrichtung bewegbar und dazu eingerichtet ist, bei Drehung der Welle (3;46;62) den jeweiligen Betätigungsabschnitt (42;93) der Greifeinrichtung (25a-h;84a-i) zum Schwenken des wenigstens einen Arms (28,29;85,86) zu betätigen.

11. Vorrichtung nach Anspruch 10
ferner umfassend wenigstens einen starr mit der wenigstens einen Komponente (12;54;69) verbundenen Arretiersteg (17;56;74), welche sich in hauptsächlich radialer Richtung erstreckt und zum Koppeln mit einem gegenüber der Welle (3;46;62) stationären Gegenstand (18) eingerichtet ist.

12. Vorrichtung nach Anspruch 10 oder 11,
wobei jede Greifeinrichtung (25a-h;84a-i) wenigstens eine durch Betätigung eines der wenigstens einen Betätigungsabschnitte (42;93) um eine Schwenkachse (87) drehbar angeordnete Schaltwelle (40;92) umfasst,
wobei die Schaltwelle (40;92) mit der Anordnung (8;51;66) axial verstellbar ist.

13. Vorrichtung nach Anspruch 12,
wobei der Betätigungsabschnitt (42;93) einen an der Schaltwelle (40;92) angeordneten, sich von dieser erstreckenden Hebel, beispielsweise in Form eines Rollenhebels, umfasst.

14. Vorrichtung nach Anspruch 12 oder 13,
wobei jede Greifeinrichtung (25a-h;84a-i) derart ausgebildet ist, dass Schwenkbewegungen der Arme (28,29;85,86) eines Greifarmpaares um ihre jeweiligen Schwenkachsen (87;89) gekoppelt sind.

15. Vorrichtung nach einem der Ansprüche 12-14,
wobei jede Greifeinrichtung (25a-h;84a-i) eine Einrichtung (37,38,39;99) zum Erzeugen einer Rückstellkraft, welche zu einem auf die Schaltwelle (40;92) wirkenden Drehmoment führt, umfasst.
